# EUROPEAN PATENT SPECIFICATION

(11) **EP 3 407 697 B1**
(45) Date of publication and mention of the grant of the patent: **26.08.2020**
(21) Application number: 17701689.6
(22) Date of filing: 25.01.2017
(51) Int. Cl.: A01B 59/041

(54) **CONTROL LOGIC FOR AUTOMATIC LOWER LINKS STABILIZERS**
STEUERLOGIK FÜR AUTOMATISCHE UNTERLENKERSTABILISATOREN
LOGIQUE DE COMMANDE POUR STABILISATEURS AUTOMATIQUES DE LIAISONS INFÉRIEURES

(30) Priority: 26.01.2016 IT UB20160494
(43) Date of publication of application: 05.12.2018
(73) Proprietor: CNH Industrial Italia S.p.A., 10135 Turin (IT)
(72) Inventor: BARONI, Massimo, 42014 Castellarano (RE) (IT); CURSANO, Federico, 4122 Modena (MO) (IT); DAVIES, Benjamin, Conwy N. Wales LL229RE (GB); BROWN, Phil, St Edmunds Suffolk IP32 7PE (GB); IOTTI, Alessandro, 42123 Reggio Emilia (RE) (IT)
(74) Representative: CNH Industrial IP Department
(86) International application number: PCT/EP2017/051556
(87) International publication number: WO 2017/129622

(56) References cited:
- DE-A1- 19 611 626
- US-A1- 2001 022 226
- US-A1- 2013 168 113

## Description

### BACKGROUND OF THE INVENTION

The present invention relates to automatic stabilizers for the lower links of three point hitches on agricultural tractors. More specifically, the present invention relates to the control logic for transitioning between rigid stabilization of the lower links of three point hitches and floating behavior of the lower links.

Farmers utilize a wide variety of agricultural implements to perform agricultural functions, some of which are adapted to be connected to an agricultural tractor by way of a three point hitch. The use of a three point hitch allows the agricultural implement to be raised for transport and maneuvering and to be lowered to engage the ground. Three point hitches are typically equipped with flexible joints at the ends of the links, which allows a certain amount of relative movement between the tractor and the implement. However, this relative movement can be detrimental if it is not controlled under certain circumstances. For example, excessive sway of the implement when attached to the three point hitch can result in interference between the lower links and the tractor's rear tires. Especially when the implement is raised from the ground, such excessive sway can further result in wear and breakage of the pivot points, in the three point linkage itself, in the agricultural implement, and in the frame and components of the entire tractor. Furthermore, such uncontrolled movement of the three point hitch can make operating the tractor uncomfortable and can cause collisions with bystanders or other vehicles and obstacles during road travel.

In order to prevent this, it is known to use stabilizers on the lower links of the three point hitch of an agricultural tractor. Such stabilizers typically connect to the lower links of the three point hitch at an angle, so that they stabilize the lower link against sideways movement. Lower link stabilizers may be capable of operating in a rigid mode, wherein they are locked against any sideways movement, and a float mode, wherein sideways movement is allowed. The use of such lower link stabilizers helps to prevent excessive sway, uncontrolled movement, wear, and breakage of tractor and implement componentry. For example US2013168113 discloses a multi-mode steerable 3-point hitch comprising: a pivotal hitch frame having a generally vertical pivot axis, the hitch frame coupled to first and second draft arms on each side of the hitch frame; and a hitch support structure affixed to a chassis, the hitch support structure coupled to a pair of opposable steering cylinders that are coupled to the hitch frame, the hitch frame and hitch support operably connected to enable concurrent rotation about the vertical pivot axis with draft arm sway.

However, the use of prior art lower link stabilizers that are capable of both a rigid mode and a float mode can create unforeseen conditions if they unexpectedly transition from the rigid mode to the float mode or if they unexpectedly transition from the float mode to the rigid mode. This is especially true when an operator is raising or lowering the agricultural implement using a fender switch, or a switch that is operated from outside the tractor. Under this condition, the operator may be caught unaware by the sudden sideways movement of the heavy agricultural implement. For example, the operator may be lowering the agricultural implement using the three point hitch with the tractor positioned on a slight incline while standing next to the tractor using the fender switch. The stabilizers may transition from the rigid mode to the float mode, so that the agricultural implement moves sideways towards the operator. If the operator is raising the agricultural implement using the three point hitch while standing next to the tractor using the fender switch, and the stabilizers transition from the float mode to the rigid mode, causing the three point hitch to suddenly center the agricultural implement, which may have previously been in an un-centered position, the operator may again be struck by the heavy agricultural implement as it moves sideways.

What is needed in the art is a control system having control logic that manages the operation of lower link stabilizers, so that the transition from the rigid mode to the float mode or from the float mode to the rigid mode is accomplished in a controlled and predictable manner.

### SUMMARY OF THE INVENTION

The present invention provides a control system for automatic lower link stabilizers connected to the lower links of a three point hitch, wherein, when in a control mode enabled condition, lower link stabilizer control logic automatically commands the automatic lower link stabilizers to operate in a rigid mode that centers and prevents lateral movement of the lower links or in a float mode that allows lateral movement of the lower links. The lower link stabilizer control logic of the control system selects the rigid mode or the float mode of the automatic lower link stabilizers according to the position of the three point hitch and its vertical direction of movement, as well as according to whether the movement of the three point hitch is commanded from within the cab of the agricultural tractor or from one or more external or fender switches.

The control system generally utilizes both an upper rigid mode transition threshold value which may be represented by a rigid mode transition threshold line and a lower float mode transition threshold value which may be represented by a float mode transition threshold line. Both values may be expressed and entered as a percentage of the overall stroke of the three point hitch. The upper rigid mode transition threshold value is always above the lower float mode transition threshold value, typically by at least five percent. When the upper rigid mode transition threshold value is reached as the three point hitch is being raised as the result of a command by an operator using an input from within the cab of the tractor, the automatic lower link stabilizers are commanded to enter the rigid mode, which centers and holds centered the lower links of the three point hitch. When the lower float mode transition threshold value is reached as the three point hitch is being lowered as the result of a command by an operator using an input from within the cab of the tractor, the automatic lower link stabilizers are commanded to enter the float mode, which allows the lower links to move laterally.

If the three point hitch is being raised as a result of a command by an operator using an external or fender switch and the automatic lower link stabilizers are in the float mode, the upwards motion is interrupted by the control system when the three point hitch reaches the upper rigid mode transition threshold value. The operator must then release and repress the fender switch to continue raising the three point hitch beyond the point where a transition from the float mode to the rigid mode will occur. This is done in order to alert and protect the operator, who may be in close proximity to the three point hitch and any agricultural implemented attached thereto, from unexpected lateral movement of the agricultural implement when the automatic lower link stabilizers center the lower links of the three point hitch. Thereafter, the lower link stabilizer control logic automatically enters a control mode disabled condition, wherein the automatic lower link stabilizers remain in rigid mode regardless of whether the three point hitch is lowered past the lower float mode transition threshold value as a result of a command by the operator using the external or fender switch.

In order to resume transitioning to and from the rigid mode and the float mode according to the upper rigid mode transition threshold value and the lower float mode transition threshold value, the operator may be required to re-enable the control mode enabled condition from within the cab of the agricultural tractor. Alternately, the lower link stabilizer control logic may resume transitioning to and from the rigid mode and the float mode according to the upper rigid mode transition threshold value and the lower float mode transition threshold value if either the control mode is re-enabled by the operator from within the cab of the agricultural tractor, or the three point hitch is simply lowered past the lower float mode transition threshold value by being commanded by the operator from within the cab of the agricultural tractor. In both embodiments, however, the lower link stabilizer control logic will not resume transitioning to and from the rigid mode and the float mode according to the upper rigid mode transition threshold value and the lower float mode transition threshold value simply by lowering the three point hitch past the lower float mode transition threshold value using the external or fender switch.

Additionally, the lower link stabilizer control logic may be placed in the control mode disabled condition by the operator, in which condition the automatic lower link stabilizers are commanded to be centered and locked, and they remain in the rigid mode throughout the range of motion of the three point hitch. Selection of the control mode enabled condition, along with entry of the upper rigid mode transition threshold value and the lower float mode transition threshold value, and selection of the control mode disabled condition, may be accomplished by the operator using a monitor located in the cab of the agricultural tractor that is operable to both display information and to allow for the entry of selections and information, such as a touch screen display.

The invention in one form is directed to a system for controlling the lower links stabilizers of a three point hitch of an agricultural tractor. The system may work in cooperation with a separate system for controlling the three point hitch itself. The system includes at least one automatic lower link stabilizer connected to the lower links of the three point hitch that selectively stabilizes the three point hitch against lateral movement when in a rigid mode, and that selectively allows lateral movement of the three point hitch when in a float mode. A lower link stabilizer controller that implements the lower link stabilizer control logic may be connected to the at least one automatic lower link stabilizer and control the selection of the rigid mode or the float mode of the at least one automatic lower link stabilizer. A separate three point hitch controller may selectively command the three point hitch to raise and lower. Alternately, the lower link stabilizer control logic that controls the lower links stabilizers of the three point hitch may reside in a common controller with the control logic that is responsible for raising and lowering the three point hitch.

At least one external switch is connected to the lower link stabilizer controller, or to the common controller, as applicable, for use by an operator to raise or lower the three point hitch from a position adjacent to the agricultural tractor. The at least one external switch is read by the lower link stabilizer control logic, which cooperates with the control logic that is responsible for raising and lowering the three point hitch to interrupt upwards motion of the three point hitch, under the condition described previously. The system further includes a device connected to the lower link stabilizer controller, or common controller as applicable, which is operable to allow an operator to enter a rigid mode transition threshold value and a float mode transition threshold value. The lower link stabilizer control logic is operable to receive input from the at least one external switch and to interrupt the raising of the three point hitch, notwithstanding the input from the at least one external switch, when the three point hitch is raised to a position corresponding to the rigid mode transition threshold value and when the at least one automatic lower link stabilizer is already in the float mode. The lower link stabilizer control logic is further operable to place the at least one automatic lower link stabilizer in the rigid mode and to resume raising the three point hitch beyond the position corresponding to the rigid mode transition threshold value only upon release of the at least one external switch and re-initiation of the upward motion of the three point hitch by the operator using the at least one external switch.

The invention in another form is directed to a method for controlling a three point hitch of an agricultural tractor. The method includes several steps. The first step is providing at least one automatic lower link stabilizer connected to the lower links of the three point hitch. The second step is selectively stabilizing the three point hitch against lateral movement using the at least one automatic lower link stabilizer when in a rigid mode. The third step is selectively allowing lateral movement of the three point hitch using the at least one automatic lower link stabilizer when in a float mode. The fourth step is providing a controller with control logic connected to the at least one automatic lower link stabilizer. The fifth step is using the control logic to control the selection of the rigid mode or the float mode of the at least one automatic lower link stabilizer. The sixth step is providing at least one external switch connected to the controller for use by an operator to raise or lower the three point hitch from a position adjacent to the agricultural tractor. The seventh step is the control logic receiving input from the at least one external switch. The eighth step is the control logic interrupting raising of the three point hitch and placing the at least one lower link stabilizer in the rigid mode when the three point hitch is being raised in response to the at least one external switch, when the three point hitch is raised to a position corresponding to a rigid mode transition threshold value, and when the at least one automatic lower link stabilizer is in the float mode. The ninth step is the control logic allowing raising of the three point hitch to resume beyond the position corresponding to the rigid mode transition threshold value only upon release of the at least one external switch and re-initiation of the upward motion of the three point hitch by the operator using the at least one external switch.

An advantage of the present invention is that it prevents unexpected and uncontrolled transitions from the float mode to the rigid mode and from the rigid mode to the float mode, especially when an operator is raising or lowering the agricultural implement using a fender switch.

### BRIEF DESCRIPTION OF THE DRAWINGS

The above-mentioned and other features and advantages of the invention, and the manner of attaining them, will become more apparent and the invention will be better understood by reference to the following description of embodiments of the invention taken in conjunction with the accompanying drawings, wherein:
Fig. 1 is a top view of an embodiment of an agricultural tractor having a three point hitch according to an embodiment the present invention;
Fig. 2 is a graphical representation of an embodiment of a control system for the automatic lower links stabilizers of a three point hitch of an agricultural tractor, according to an embodiment of the present invention;
Fig. 3A is a side view of an embodiment of an agricultural tractor having a three point hitch having automatic lower link stabilizers and a control system, according to an embodiment of the present invention;
Fig. 3B is a top view of an embodiment of an agricultural tractor having a three point hitch having automatic lower link stabilizers and a control system, according to an embodiment of the present invention;
Fig. 4A is a side view of an embodiment of an agricultural tractor having a three point hitch having automatic lower link stabilizers and a control system, according to an embodiment of the present invention;
Fig. 4B is a top view of an embodiment of an agricultural tractor having a three point hitch having automatic lower link stabilizers and a control system, according to an embodiment of the present invention;
Fig. 5A is a side view of an embodiment of an agricultural tractor having a three point hitch having automatic lower link stabilizers and a control system, according to an embodiment of the present invention;
Fig. 5B is a top view of an embodiment of an agricultural tractor having a three point hitch having automatic lower link stabilizers and a control system, according to an embodiment of the present invention;
Fig. 6A is a side view of an embodiment of an agricultural tractor having a three point hitch having automatic lower link stabilizers and a control system, according to an embodiment of the present invention;
Fig. 6B is a top view of an embodiment of an agricultural tractor having a three point hitch having automatic lower link stabilizers and a control system, according to an embodiment of the present invention;
Fig. 7A is a side view of an embodiment of an agricultural tractor having a three point hitch having automatic lower link stabilizers and a control system, according to an embodiment of the present invention; and
Fig. 7B is a top view of an embodiment of an agricultural tractor having a three point hitch having automatic lower link stabilizers and a control system, according to an embodiment of the present invention.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "agricultural tractor," "three point hitch," "stabilizer," and "monitor" are used principally throughout this specification for convenience but it is to be understood that these terms are not intended to be limiting. Thus, "agricultural tractor" may refer to any type of industrial or agricultural equipment that is adapted as a source of traction or power for one or more implements. "Three point hitch" refers to a hitch having three pivoting links that is used to raise and lower an implement, but should not be construed as limiting and may represent an another type of hitch, such as a hitch or lifting mechanism having fewer or more pivoting links. "Automatic stabilizer" refers to a link that connects to the lower links of a three point hitch and selectively constrains it, but should not be construed as limiting and may represent another form of constraint such as a chain that may be selectively placed in tension, or a device that selectively physically restricts one or more degrees of freedom of the pivoting ends of the lower links. "Monitor" refers to an electronic device that displays information and allows for the entry of selections or information, but should not be construed as limiting and may represent another form of information display and entry, such as buttons, tell-tales, or readouts.

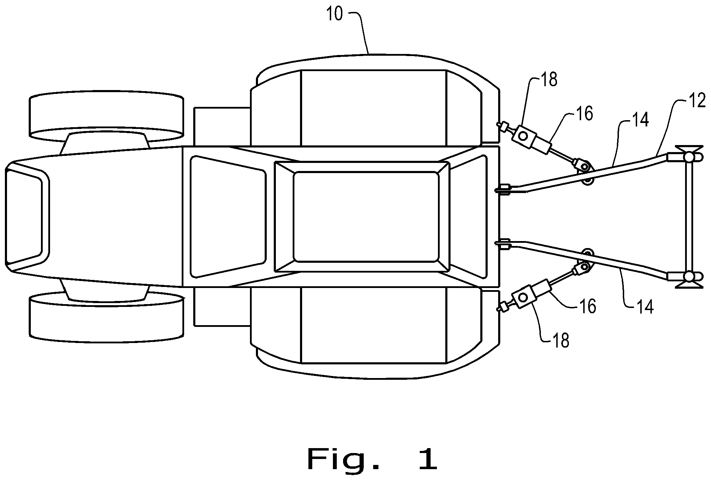

Turning now to Fig. 1, an agricultural tractor 10 is shown having a three point hitch 12. For clarity, in this and subsequent figures, only the lower links 14 of the three point hitch 12 are shown, with the upper link of the three point hitch 12 being omitted. At least one of the lower links 14 is provided with an automatic lower link stabilizer 16, which connects to the lower link 14 and to the agricultural tractor 10 at an angle. Each automatic lower link stabilizer 16 can be selectively placed in a rigid mode wherein it is rigid along its length, thereby constraining the lower links 14 against lateral movement. Each automatic lower link stabilizer 16 can further be selectively placed in a float mode wherein it can telescope along its length, thereby allowing the lower links 14 some lateral movement. In the float mode, the automatic lower link stabilizers 16 may or may not still exert damping force against lateral movement of the lower links 14.

This selective telescoping of the automatic lower link stabilizers 16 may be accomplished hydraulically, pneumatically, electrically, magnetically, mechanically, or by any combination thereof. Stabilizer switches or valves 18 may be used to change the automatic lower link stabilizers 16 between the rigid mode and the float mode. For example, the automatic lower link stabilizers 16 may be hydraulic, with a piston moving within a cylinder, the opposite ends of which may be interconnected by a valve 18. In this embodiment, closing the valve prevents the exchange of hydraulic fluid from one side of the piston to another, thereby making the stabilizer 16 rigid. Opening the valve allows the exchange of hydraulic fluid from one side of the piston to the other, thereby making the stabilizer 16 free to telescope along its length. The float mode may be used in order to allow an agricultural implement (not shown) connected to the agricultural tractor 10 by way of the three point hitch 12 to undergo a certain amount of lateral movement relative to the agricultural tractor 10, in order to accommodate variations in the terrain over which the agricultural tractor 10 and implement pass during field operations and in order to accommodate small direction changes. The rigid mode may be used in order to stabilize the agricultural implement relative to the agricultural tractor 10 when the implement is lifted for road travel or maneuvering. Further, the automatic lower link stabilizers 16 may be capable of actively centering the lower links 14 of the three point hitch 12 in their lateral range of movement, so that when activated, the automatic lower link stabilizers 16 cause the three point hitch 12 and any implement attached to it to become centered behind the agricultural tractor 10.

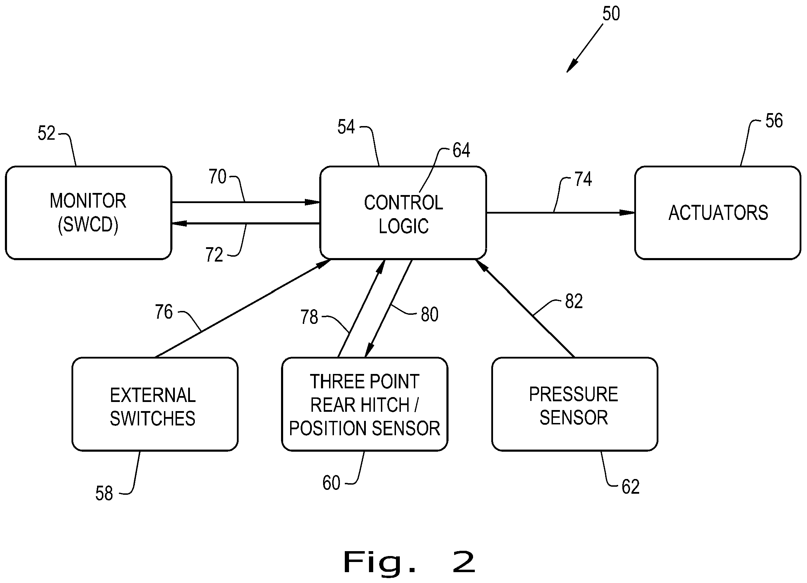

Fig. 2 shows an embodiment of a control system 50 having a lower link stabilizer controller 54 with lower link stabilizer control logic 64 that manages the operation of the automatic lower link stabilizers 16 (not shown in Fig. 2). Alternately, the controller 54 may represent a common controller that also has separate control logic responsible for raising and lowering the three point hitch 12 (not shown in Fig. 2) from the lower link stabilizer control logic 64 that manages the operation of the automatic lower link stabilizers 16. The control system 50 is provided with a monitor 52 connected to the lower link stabilizer controller 54, which monitor 52 may be located in the cab of the agricultural tractor 10, and which may be operable to both display information and to allow for the entry of selections and information, such as a touch screen display. Specifically, the monitor 52 allows an operator to set height thresholds for rigid mode and float mode transitions, as will be shown. The monitor 52 communicates commands 70, such as the selected rigid mode and float mode transition threshold values, to the lower link stabilizer control logic 64 within the lower link stabilizer controller 54. The lower link stabilizer control logic 64 within the lower link stabilizer controller 54 then checks to ensure that the selected threshold values are allowed, and updates 72 the visual display of the monitor 52 accordingly.

The control system 50 is further provided with actuators 56 connected to the lower link stabilizer controller 54, or common controller as applicable, that are further connected to the stabilizer switches or valves 18 (not shown in Fig. 2) that are used to change the automatic lower link stabilizers 16 between the rigid mode and the float mode. Commands 74 are sent to the actuators 56 by the lower link stabilizer control logic 64 of the lower link stabilizer controller 54 in order to change the automatic lower link stabilizers 16 between the rigid mode and the float mode according to the rigid mode and float mode transition threshold values entered by the operator, as well as according to other settings and conditions, as will be shown.

The control system 50 is further provided with one or more external switches 58, which may be referred to as fender switches, located on the exterior of the agricultural tractor, and which are connected to the lower link stabilizer controller 54, or common controller as applicable. The one or more external switches 58 are used by an operator to raise or lower the three point hitch 12 (not shown in Fig. 2) when the operator is standing outside of the cab of the tractor 10. Further, input 76 received by the lower link stabilizer control logic 64 within the lower link stabilizer controller 54 is used to indicate the presence of the operator in close proximity to the three point hitch 12, so that the lower link stabilizer control logic 64 alters the rigid mode and float mode transitions in order to perform such transitions in a controlled and predictable manner, as will be shown.

The lower link stabilizer controller 54, or common controller as applicable, of the control system 50 is further connected to a three point hitch position interface 60, which includes a three point hitch position sensor, such that the lower link stabilizer control logic 64 within the lower link stabilizer controller 54 receives the current rear hitch position 78 from the three point hitch position sensor connected to the three point hitch 12, and such that the lower link stabilizer control logic 64 within the lower link stabilizer controller 54 is operable to send direct or overriding commands 80 to the three point hitch position interface 60. In particular, the vertical movement of the three point hitch 12 can be stopped and re-initialized by the lower link stabilizer control logic 64 within the lower link stabilizer controller 54, or common controller as applicable, when the one or more external switches 58 are being used by an operator to raise or lower the three point hitch 12. Whether the vertical movement of the three point hitch 12 is being commanded using the one or more external switches 58, or whether the vertical movement is being otherwise commanded from within the cab of the tractor 10, the current rear hitch position 78 is read by the lower link stabilizer control logic 64 of the lower link stabilizer controller 54, or common controller as applicable, and compared with the rigid mode and float mode transition threshold values in order to perform the transitions from rigid mode to float mode and vice versa, when appropriate.

The lower link stabilizer controller 54, or common controller as applicable, of the control system 50 is further connected to one or more pressure sensors 62, which provide feedback 82 from the automatic lower link stabilizers 16, such as cylinder pressures in the embodiment wherein the automatic lower link stabilizers 16 are hydraulic in nature. In this way, the lower link stabilizer control logic 64 within the lower link stabilizer controller 54 is able to determine that the commands 74 sent to the actuators 56 in order to change the automatic lower link stabilizers 16 between the rigid mode and the float mode have been received and implemented.

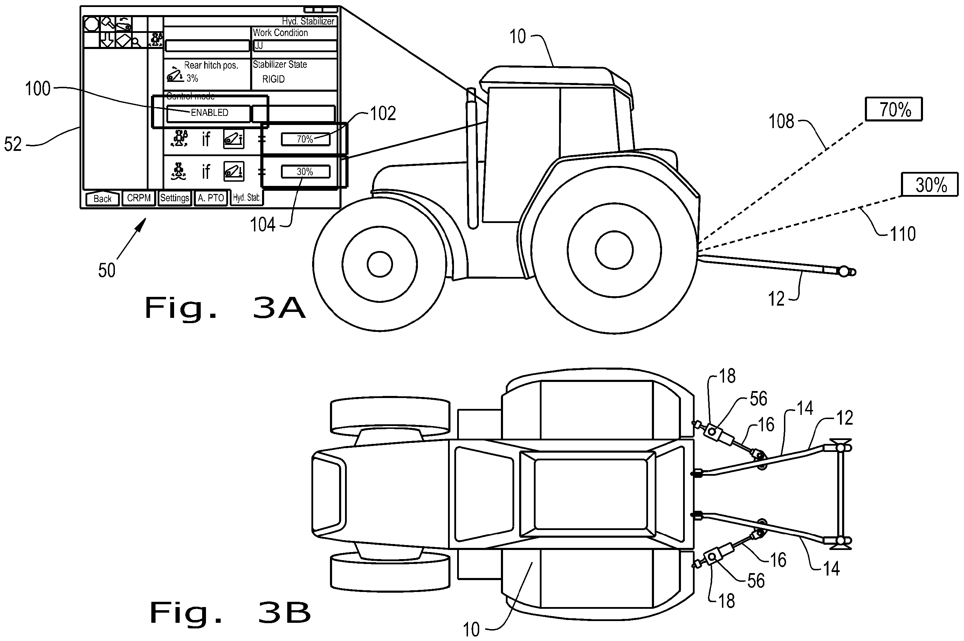

Turning now to Figs. 3A through 7B, modes of functioning of the control system 50 are shown. The control system 50 is again connected to the three point hitch 12 of an agricultural tractor 10. The three point hitch 12 is again provided with an upper link (not shown) and lower links 14 having automatic lower link stabilizers 16 with stabilizer switches or valves 18 through which the control system 50 controls whether the automatic lower link stabilizers 16 operate in the rigid mode or in the float mode, by way of actuators 56. In Figs. 3A and 3B, an operator selects the control mode to be enabled 100, and then selects values for a rigid mode transition threshold 102 and for a float mode transition threshold 104. These values are represented by a rigid mode transition threshold line 108 and a float mode transition threshold line 110. The automatic lower link stabilizers 16 are shown in the float mode, so that the lower links 14 of the three point hitch 12 are allowed to move laterally, represented by the three point hitch 12 being in an off-center position.

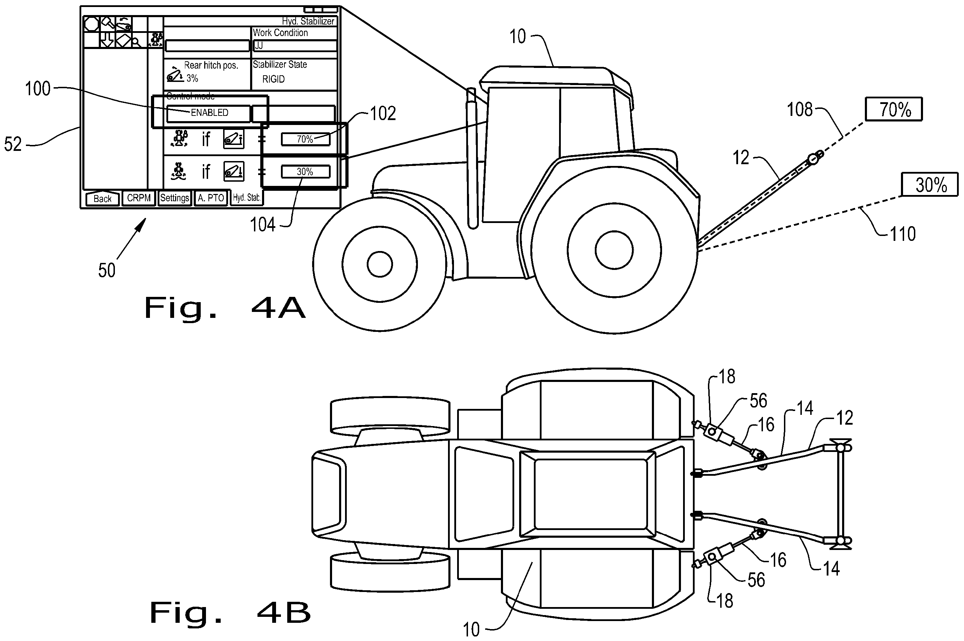

In Figs. 4A and 4B, with the control system 50 still in the control mode enabled 100 condition, an operator has raised the three point hitch 12 using commands given from within the cab of the agricultural tractor 10 until the rigid mode transition threshold value 102 as represented by rigid mode transition threshold line 108 has been reached by the three point hitch 12. At this point, the lower link stabilizer control logic 64 of the lower link stabilizer controller 54, or common controller as applicable, of the control system 50 places the automatic lower link stabilizers 16 in the rigid mode. The automatic lower link stabilizers 16 automatically center and rigidly stabilize the lower links 14 of the three point hitch 12 without interfering with the continuing upward motion of the three point hitch 12. This is represented by the three point hitch 12 being in a centered position.

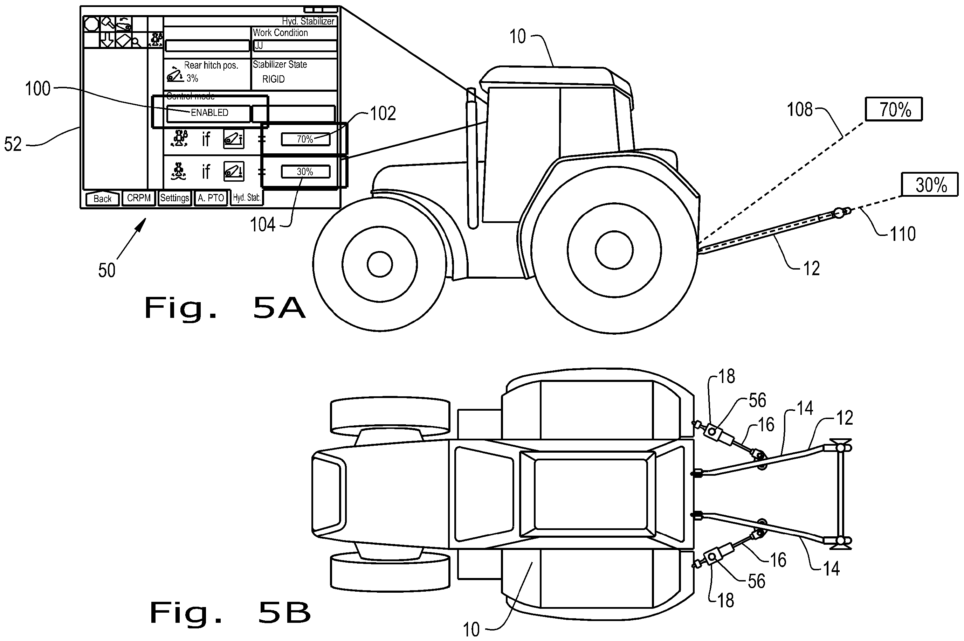

In Figs. 5A and 5B, with the control system 50 still in the control mode enabled 100 condition, an operator has lowered the three point hitch 12 using commands given from within the cab of the agricultural tractor 10 until the float mode transition threshold value 104 as represented by the float mode transition threshold line 110 has been reached. At this point, the lower link stabilizer control logic 64 of the lower link stabilizer controller 54, or common controller as applicable, of the control system 50 places the automatic lower link stabilizers 16 in the float mode. The lower links 14 of the three point hitch 12 are allowed to move laterally, represented by the three point hitch 12 again being in an off-center position.

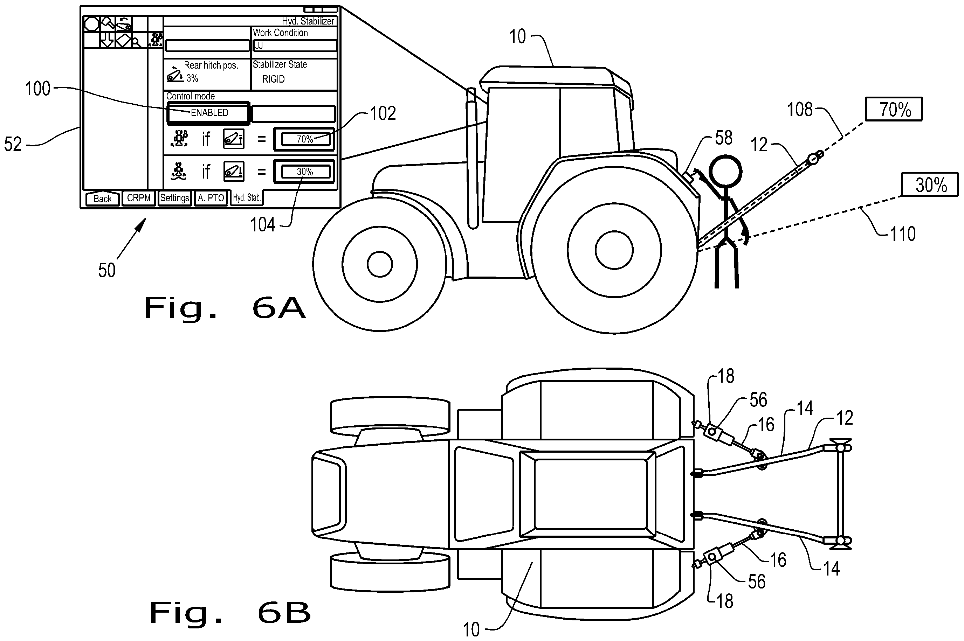

In Figs. 6A and 6B, with the control system 50 still in the control mode enabled 100 condition, an operator is in the process of raising the three point hitch 12 using a fender switch 58, which is connected to the lower link stabilizer controller 54, or common controller as applicable, of the control system 50. The automatic lower link stabilizers 16 are in the float mode so that the lower links 14 of the three point hitch 12 are allowed to move laterally, represented by the three point hitch 12 again being in an off-center position. In order to maintain upward motion of the three point hitch 12, the operator is required to press and keep pressed in an upwards indicating position the fender switch 58. Once the rigid mode transition threshold value 102 as represented by rigid mode transition threshold line 108 has been reached, the lower link stabilizer control logic 64 of the lower link stabilizer controller 54, or common controller as applicable, of the control system 50 stops the upwards motion of the three point hitch 12. This alerts the operator, who is in close proximity with the three point hitch 12, and any agricultural implement attached to it, that the rigid mode transition threshold value 102 has been reached and that lateral movement of the three point hitch 12 in response to the automatic lower link stabilizers 16 centering the lower links 14 may occur.

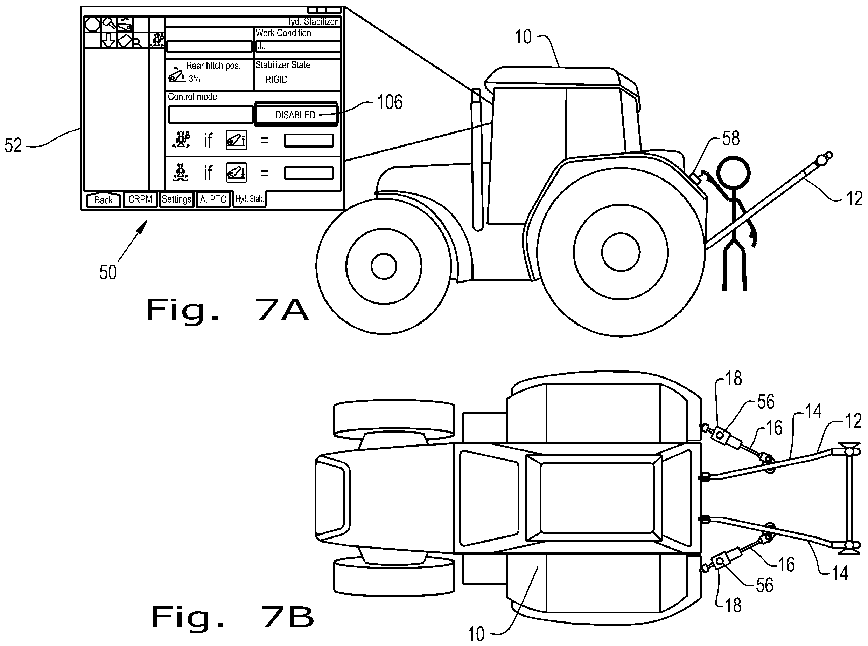

In order to continue raising the three point hitch 12, as shown in Figs. 7A and 7B, the operator is required by the lower link stabilizer control logic 64 of the lower link stabilizer controller 54, or common controller as applicable, of the control system 50 to release and repress in the upwards indicating position the fender switch 58. This causes the automatic lower link stabilizers 16 to center the lower links 14 of the three point hitch 12, thereby entering the rigid mode. The control system 50 then enters a control mode disabled 106 condition, so that the automatic lower link stabilizers 16 remain locked in the rigid mode for the entire upwards and downwards stroke of the three point hitch 12.

In order to resume transitioning to and from the rigid mode and the float mode according to the rigid mode transition threshold value 102 and the float mode transition threshold value 104, the operator may be required to re-enable the control mode enabled condition 100 using the monitor 52. Alternately, the lower link stabilizer control logic 64 may resume transitioning to and from the rigid mode and the float mode according to the rigid mode transition threshold value 102 and the float mode transition threshold value 104 if either the control mode enabled condition 100 is selected by the operator using the monitor 52, or the three point hitch 12 is simply lowered past the float mode transition threshold value 104 by being commanded by the operator from within the cab of the agricultural tractor 10. In both embodiments, however, the lower link stabilizer control logic 64 will not resume transitioning to and from the rigid mode and the float mode according to the rigid mode transition threshold value 102 and the float mode transition threshold value 104 simply by lowering the three point hitch 12 past the float mode transition threshold value 104 using the external or fender switch 58.

The control mode disabled 106 setting can also be selected by the operator from within the cab of the agricultural tractor 10 using the monitor 52, with the result that the automatic lower link stabilizers 16 remain locked in the rigid mode for the entire upwards and downwards stroke of the three point hitch 12.

## Claims

1. A system (50) for controlling a three point hitch (12) of an agricultural tractor (10), the system (50) comprising:
at least one automatic lower link stabilizer (16) connected to at least one lower link (14) of the three point hitch (12) for selectively stabilizing the three point hitch (12) against lateral movement when in a rigid mode, and for selectively allowing lateral movement of the three point hitch (12) when in a float mode;
a controller (54) connected to the at least one automatic lower link stabilizer (16) for controlling the selection of the rigid mode or the float mode of the at least one automatic lower link stabilizer (16); and
at least one external switch (58) connected to the controller (54) for use by an operator to raise or lower the three point hitch (12) from a position adjacent to the agricultural tractor (10);
wherein
the controller (54) is provided with control logic (64) operable to receive input (76) from said at least one external switch (58) and **characterized in that** the control logic (64) is operable to interrupt raising the three point hitch (12) when said three point hitch (12) is being raised in response to said at least one external switch (58), when the three point hitch (12) is raised to a position (108) corresponding to a rigid mode transition threshold value (102), and when the at least one automatic lower link stabilizer (16) is in the float mode; and
said control logic (64) being further operable to place the at least one automatic lower link stabilizer (16) in the rigid mode and to allow raising of the three point hitch (12) to resume beyond the position (108) corresponding to said rigid mode transition threshold value (102) only upon release of the at least one external switch (58) and re-initiation of the upward motion of the three point hitch (12) by the operator using the at least one external switch (58).

2. The system (50) of claim 1, wherein: said control logic (64) being further operable to allow the at least one automatic lower link stabilizer (16) to transition from the float mode to the rigid mode upon the three point hitch (12) reaching said position (108) corresponding to said rigid mode transition threshold value (102) without interruption when said three point hitch (12) is raised in response to an input other than said at least one external switch (58).

3. The system (50) of claims 1 or 2, wherein:
said control logic (64) being further operable to enter a control mode disabled (106) condition and to keep the at least one automatic lower link stabilizer (16) in the rigid mode despite the three point hitch (12) being lowered to a position (110) corresponding to a float mode transition threshold value (104) when the three point hitch (12) is lowered in response to said at least one external switch (58).

4. The system (50) of claim 3, wherein:
said control logic (64) being further operable to resume allowing the at least one automatic lower link stabilizer (16) to transition from the rigid mode to the float mode upon the three point hitch (12) reaching said position (110) corresponding to said float mode transition threshold value (104) when the three point hitch (12) is lowered in response to an input other than said at least one external switch (58).

5. The system (50) of claim 3, wherein:
said control logic (64) being further operable to resume allowing the at least one automatic lower link stabilizer (16) to transition from the rigid mode to the float mode upon the three point hitch (12) reaching said position (110) corresponding to said float mode transition threshold value (104) only after an operator has placed said control logic (64) in a control mode enabled (100) condition.

6. The system (50) of one claim from 3 to 5, further comprising:
a device (52) connected to the controller (54) and operable to allow an operator to enter said rigid mode transition threshold value (102) and/or said float mode transition threshold value (104).

7. The system (50) of claim 6, wherein: said device (52) being capable of receiving entered information and/or selections, and being further capable of displaying status information.

8. The system (50) of any one of the preceding claims, wherein:
said at least one automatic lower link stabilizer (16) being operable to move said three point hitch (12) to a laterally centered position when placed in said rigid mode.

9. The system (50) of any one of the preceding claims, wherein:
said control logic (64) being further operable to be placed in a control mode disabled (106) condition in response to an operator selection, wherein said at least one automatic lower link stabilizer (16) remains in the rigid mode throughout the range of motion of the three point hitch (12).

10. The system (50) of any one of the preceding claims, wherein:
said at least one automatic lower link stabilizer (16) being one of hydraulic, pneumatic, electric, magnetic, and mechanical.

11. The system (50) of any one of the preceding claims, wherein:
said system (50) further includes at least one pressure sensor (62) providing feedback (82) to said control logic (64) indicating the rigid or float mode status of said at least one automatic lower link stabilizer (16).

12. A method for controlling a three point hitch (12) of an agricultural tractor (10), the method comprising the steps of:
providing at least one automatic lower link stabilizer (16) connected to at least one lower link (14) of the three point hitch (12);
selectively stabilizing the three point hitch (12) against lateral movement using the at least one automatic lower link stabilizer (16) when in a rigid mode;
selectively allowing lateral movement of the three point hitch (12) using the at least one automatic lower link stabilizer (16) when in a float mode;
providing a controller (54) with control logic (64) connected to the at least one automatic lower link stabilizer (16);
using said control logic (64) to control the selection of the rigid mode or the float mode of the at least one automatic lower link stabilizer (16); and
providing at least one external switch (58) connected to the controller (54) for use by an operator to raise or lower the three point hitch (12) from a position adjacent to the agricultural tractor (10);
said control logic (64) receiving input (76) from said at least one external switch (58);
**characterized in that** the method further comprises the steps of:
said control logic (64) interrupting raising of the three point hitch (12) and placing the at least one lower link stabilizer (16) in the rigid mode when:
said three point hitch (12) is being raised in response to said at least one external switch (58),
said three point hitch (12) is raised to a position (108) corresponding to a rigid mode transition threshold value (102), and
the at least one automatic lower link stabilizer (16) is in the float mode; and
said control logic (64) allowing raising of the three point hitch (12) to resume beyond the position (108) corresponding to said rigid mode transition threshold value (102) only upon release of the at least one external switch (58) and re-initiation of the upward motion of the three point hitch (12) by the operator using the at least one external switch (58).

13. The method of claim 12, further comprising the steps of:
said control logic (64) entering a control mode disabled (106) condition and keeping the at least one automatic lower link stabilizer (16) in the rigid mode despite the three point hitch (12) being lowered to a position (110) corresponding to a float mode transition threshold value (104) when the three point hitch (12) is lowered in response to said at least one external switch (58).

14. The method of claim 13, wherein:
said control logic (64) resuming allowing the at least one automatic lower link stabilizer (16) to transition from the rigid mode to the float mode upon the three point hitch (12) reaching said position (110) corresponding to said float mode transition threshold value (104) when the three point hitch (12) is lowered in response to an input other than said at least one external switch (58).

15. The method of claim 13, wherein:
said control logic (64) resuming allowing the at least one automatic lower link stabilizer (16) to transition from the rigid mode to the float mode upon the three point hitch (12) reaching said position (110) corresponding to said float mode transition threshold value (104) only after an operator has placed said control logic (64) in a control mode enabled (100) condition.

## Patentansprüche

1. System (50) zum Steuern einer Dreipunkt-Anhängevorrichtung (12) eines landwirtschaftlichen Traktors (10), wobei das System (50) umfasst:
zumindest einen automatischen Unterlenker-Stabilisator (16), der mit zumindest einem Unterlenker (14) der Dreipunkt-Anhängevorrichtung (12) verbunden ist, um die Dreipunkt-Anhängevorrichtung (12) wahlweise gegen seitliche Bewegung zu stabilisieren, wenn er sich in einer starren Betriebsart befindet, und um wahlweise eine seitliche Bewegung der Dreipunkt-Anhängevorrichtung (12) zu ermöglichen, wenn er sich in einer gleitenden Betriebsart befindet;
eine Steuereinrichtung (54), die mit dem zumindest einen automatischen Unterlenker-Stabilisator (16) verbunden ist, um die Auswahl der starren Betriebsart oder der gleitenden Betriebsart des zumindest einen automatischen Unterlenker-Stabilisators (16) zu steuern; und
zumindest einen äußeren Schalter (58), der zur Verwendung durch einen Anwender mit der Steuereinrichtung (54) verbunden ist, um die Dreipunkt-Anhängevorrichtung (12) von einer Position neben dem landwirtschaftlichen Traktor (10) aus anzuheben oder abzusenken;
wobei die Steuereinrichtung (54) mit einer Steuerlogik (64) ausgestattet ist, die betreibbar ist, um eine Eingabe (76) vom zumindest einen äußeren Schalter (58) zu empfangen, und **dadurch gekennzeichnet, dass** die Steuerlogik (64) derart betreibbar ist, dass sie das Anheben der Dreipunkt-Anhängevorrichtung (12) unterbricht, wenn die Dreipunkt-Anhängevorrichtung (12) in Reaktion auf den zumindest einen äußeren Schalter (58) angehoben wird, wenn die Dreipunkt-Anhängevorrichtung (12) in eine Position (108) angehoben wird, die einem Übergangsgrenzwert (102) der starren Betriebsart entspricht, und wenn sich der zumindest eine automatische Unterlenker-Stabilisator (16) in der gleitenden Betriebsart befindet; und
die Steuerlogik (64) weiterhin derart betreibbar ist, dass sie den zumindest einen automatischen Unterlenker-Stabilisator (16) in die starre Betriebsart versetzt und das Anheben der Dreipunkt-Anhängevorrichtung (12) zum Fortfahren über die Position (108), die dem Übergangsgrenzwert (102) der starren Betriebsart entspricht, nur nach dem Loslassen des zumindest einen äußeren Schalters (58) und Wiedereinleiten der Aufwärtsbewegung der Dreipunkt-Anhängevorrichtung (12) durch den Anwender unter Verwendung des zumindest einen äußeren Schalters (58) ermöglicht.

2. System (50) nach Anspruch 1, wobei:
die Steuerlogik (64) weiterhin derart betreibbar ist, dass sie es dem zumindest einen automatischen Unterlenker-Stabilisator (16) ermöglicht, aus der gleitenden Betriebsart in die starre Betriebsart überzugehen, nachdem die Dreipunkt-Anhängevorrichtung (12) die Position (108) erreicht hat, die dem Übergangsgrenzwert (102) der starren Betriebsart entspricht, wenn die Dreipunkt-Anhängevorrichtung (12) in Reaktion auf eine andere Eingabe als durch den äußeren Schalter (58) angehoben wird.

3. System (50) nach Anspruch 1 oder 2, wobei:
die Steuerlogik (64) weiterhin derart betreibbar ist, dass sie einen Steuerungsmodus-Deaktivierungszustand (106) einnimmt und den zumindest einen automatischen Unterlenker-Stabilisator (16) in der starren Betriebsart belässt, obwohl die Dreipunkt-Anhängevorrichtung (12) in eine Position (110) abgesenkt wird, die einem Übergangsgrenzwert (104) der gleitenden Betriebsart entspricht, wenn die Dreipunkt-Anhängevorrichtung (12) in Reaktion auf den zumindest einen äußeren Schalter (58) abgesenkt wird.

4. System (50) nach Anspruch 3, wobei:
die Steuerlogik (64) weiterhin derart betreibbar ist, dass sie es dem automatischen Unterlenker-Stabilisator (16) weiter ermöglicht, von der festen Betriebsart in die gleitende Betriebsart überzugehen, nachdem die Dreipunkt-Anhängevorrichtung (12) die Position (110) erreicht hat, die dem Übergangsgrenzwert (104) der gleitenden Betriebsart entspricht, wenn die Dreipunkt-Anhängevorrichtung (12) in Reaktion auf eine andere Eingabe als durch den zumindest einen äußeren Schalter (58) abgesenkt wird.

5. System (50) nach Anspruch 3, wobei:
die Steuerlogik (64) weiterhin derart betreibbar ist, dass sie es dem zumindest einen automatischen Unterlenker-Stabilisator (16) nur weiter ermöglicht, aus der starren Betriebsart in die gleitende Betriebsart überzugehen, nachdem die Dreipunkt-Anhängevorrichtung (12) die Position (110) erreicht hat, die dem Übergangsgrenzwert (104) der gleitenden Betriebsart entspricht, nachdem ein Anwender die Steuerlogik (64) in einen Steuerungsmodus-Aktivierungszustand (100) versetzt hat.

6. System (50) nach einem der Ansprüche 3 bis 5, weiterhin mit:
einer Vorrichtung (52), die mit der Steuereinrichtung (54) verbunden ist und derart betätigbar ist, dass sie es einem Anwender ermöglicht, den Übergangsgrenzwert (102) der starren Betriebsart und/oder den Übergangsgrenzwert (104) der gleitenden Betriebsart einzugeben.

7. System (50) nach Anspruch 6, wobei:
die Vorrichtung (52) dazu geeignet ist, eingegebene Informationen und/oder Auswahlen zu empfangen, und weiterhin dazu geeignet ist, Statusinformationen anzuzeigen.

8. System (50) nach einem der vorangehenden Ansprüche, wobei:
der zumindest eine automatische Unterlenker-Stabilisator (16) derart betreibbar ist, dass er die Dreipunkt-Anhängevorrichtung (12) in eine seitwärts zentrierte Stellung bewegt, wenn er in die starre Betriebsart versetzt wird.

9. System (50) nach einem der vorangehenden Ansprüche, wobei:
die Steuerlogik (64) weiterhin betätigbar ist, um in Reaktion auf eine Anwenderauswahl in einen Steuerungsmodus-Deaktivierungszustand (106) versetzt zu werden, wobei der zumindest eine automatische Unterlenker-Stabilisator (16) über den Bewegungsbereich der Dreipunkt-Anhängevorrichtung (12) in der starren Betriebsart verbleibt.

10. System (50) nach einem der vorangehenden Ansprüche, wobei:
der zumindest eine automatische Unterlenker-Stabilisator (16) hydraulisch, pneumatisch, elektrisch, magnetisch oder mechanisch ist.

11. System (50) nach einem der vorangehenden Ansprüche, wobei:
das System (50) weiterhin zumindest einen Drucksensor (62) umfasst, der der Steuerlogik (64) eine Rückmeldung (82) bereitstellt, die den starren oder den gleitenden Betriebsartstatus des zumindest einen automatischen Unterlenker-Stabilisators (16) kennzeichnet.

12. Verfahren zum Steuern einer Dreipunkt-Anhängevorrichtung (12) eines landwirtschaftlichen Traktors (10), wobei das Verfahren die Schritte umfasst:
Bereitstellen zumindest eines automatischen Unterlenker-Stabilisators (16), der mit zumindest einem Unterlenker (14) der Dreipunkt-Anhängevorrichtung (12) verbunden ist;
wahlweises Stabilisieren der Dreipunkt-Anhängevorrichtung (12) gegen seitliche Bewegung unter Verwendung des zumindest einen automatischen Unterlenker-Stabilisators (16) in einer starren Betriebsart;
wahlweises Ermöglichen einer seitlichen Bewegung der Dreipunkt-Anhängevorrichtung (12) unter Verwendung des zumindest einen automatischen Unterlenker-Stabilisators (16) in einer gleitenden Betriebsart;
Bereitstellen einer Steuereinrichtung (54) mit einer Steuerlogik (64), die mit dem zumindest einen automatischen Unterlenker-Stabilisator (16) verbunden ist;
Verwenden der Steuerlogik (64) zum Steuern der Auswahl der starren Betriebsart oder der gleitenden Betriebsart des zumindest einen automatischen Unterlenker-Stabilisators (16); und
Bereitstellen zumindest eines äußeren Schalters (58), der mit der Steuereinrichtung (54) zur Verwendung durch einen Anwender zum Anheben oder Absenken der Dreipunkt-Anhängevorrichtung (12) aus einer Position neben dem landwirtschaftlichen Traktor (10) verbunden ist;
dass die Steuerlogik (64) eine Eingabe (76) von dem zumindest einen äußeren Schalter (58) empfängt;
**dadurch gekennzeichnet** das Verfahren weiterhin die Schritte umfasst: dass die Steuerlogik (64) das Anheben der Dreipunkt-Anhängevorrichtung (12) abbricht und den zumindest einen Unterlenker-Stabilisator (16) in die starre Betriebsart versetzt, wenn:
die Dreipunkt-Anhängevorrichtung (12) in Reaktion auf den zumindest einen äußeren Schalter (58) angehoben wird,
die Dreipunkt-Anhängevorrichtung (12) in eine Position (108) angehoben wird, die einem Übergangsgrenzwert (102) der starren Betriebsart entspricht, und
der zumindest eine automatische Unterlenker-Stabilisator (16) sich in der gleitenden Betriebsart befindet; und
die Steuerlogik (64) das Anheben der Dreipunkt-Anhängevorrichtung (12) weiter über die Position (108) hinaus, die dem Übergangsgrenzwert (102) der starren Betriebsart entspricht, nur nach Loslassen des zumindest einen äußeren Schalters (58) und Wiedereinleitung der Aufwärtsbewegung der Dreipunkt-Anhängevorrichtung (12) durch den Anwender unter Verwendung des zumindest einen äußeren Schalters (58) ermöglicht.

13. Verfahren nach Anspruch 12, weiterhin umfassend die Schritte:
dass die Steuerlogik (64) einen Steuerungsmodus-Deaktivierungszustand (106) einnimmt und den zumindest einen automatischen Unterlenker-Stabilisator (16) in der starren Betriebsart belässt, obwohl die Dreipunkt-Anhängevorrichtung (12) in eine Position (110) abgesenkt wird, die einem Übergangsgrenzwert (104) der gleitenden Betriebsart entspricht, wenn die Dreipunkt-Anhängevorrichtung (12) in Reaktion auf den zumindest einen äußeren Schalter (58) abgesenkt wird.

14. Verfahren nach Anspruch 13, wobei:
die Steuerlogik (64) es dem zumindest einen automatischen Unterlenker-Stabilisator (16) weiter ermöglicht, von der starren Betriebsart in die gleitende Betriebsart überzugehen, nachdem die Dreipunkt-Anhängevorrichtung (12) die Position (110) erreicht hat, die dem Übergangsgrenzwert (104) der gleitenden Betriebsart entspricht, wenn die Dreipunkt-Anhängevorrichtung (12) in Reaktion auf eine andere Eingabe als durch den zumindest einen äußeren Schalter (58) abgesenkt wird.

15. Verfahren nach Anspruch 13, wobei:
die Steuerlogik (16) es dem zumindest einen automatischen Unterlenker-Stabilisator (16) nur weiter ermöglicht, aus der starren Betriebsart in die gleitende Betriebsart überzugehen, nachdem die Dreipunkt-Anhängevorrichtung (12) die Position (110) erreicht, die dem Übergangsgrenzwert (104) der gleitenden Betriebsart entspricht, nachdem ein Anwender die Steuerlogik (64) in einen Steuerungsmodus-Aktivierungszustand (100) versetzt hat.

## Revendications

1. Système (50) de commande d'un attelage trois points (12) d'un tracteur agricole (10), le système (50) comprenant :
au moins un stabilisateur automatique (16) de barre inférieure connecté à au moins une barre inférieure (14) de l'attelage trois points (12) permettant de stabiliser sélectivement l'attelage trois points (12) contre un déplacement latéral lorsqu'il est dans un mode rigide, et de permettre sélectivement un déplacement latéral de l'attelage trois points dans un mode de flottement,
un dispositif de commande (54) relié à au moins un stabilisateur automatique (16) de barre inférieure permettant de commander la sélection du mode rigide ou du mode de flottement du au moins un stabilisateur automatique (16) de barre inférieure ; et
au moins un commutateur extérieur (58) connecté au dispositif de commande (54) à utiliser par un conducteur pour lever ou abaisser l'attelage trois points (12) à partir d'un emplacement adjacent au tracteur agricole (10) ;
dans lequel
le dispositif de commande (54) est équipé d'une logique de commande (64) utilisable pour recevoir une entrée (76) à partir dudit au moins un commutateur externe (58) et
**caractérisé en ce que** la logique de commande (64) interrompt le soulèvement de l'attelage trois points (12) lorsque ledit attelage trois points (12) est en train d'être soulevé en réaction au dit au moins un commutateur externe (58), lorsque l'attelage trois points (12) est soulevé jusqu'à une position (108) correspondant à une valeur de seuil de transition en mode rigide (102) et lorsque le au moins un stabilisateur automatique (16) de barre inférieure est dans le mode de flottement ; et
ladite logique de commande (64) étant en outre utilisable pour placer le au moins un stabilisateur automatique (16) de barre inférieure en mode rigide et pour permettre la reprise du soulèvement de l'attelage trois points (12) au-delà de la position (108) correspondant à ladite valeur de seuil de transition en mode rigide (102) uniquement lors du déclenchement du au moins un commutateur extérieur (12) et de la remise en route du déplacement vers le haut de l'attelage trois points (12) par le conducteur au moyen du au moins un commutateur externe (58).

2. Système (50) selon la revendication 1, dans lequel :
ladite logique de commande (64) est utilisable en outre pour permettre la transition par le au moins un stabilisateur automatique (16) de barre inférieure du mode de flottement en mode rigide une fois que l'attelage trois points (12) atteint ladite position (108) correspondant à ladite valeur de seuil de transition en mode rigide (102) sans interruption lorsque ledit attelage trois points (12) est soulevé en réaction à une entrée autre que ledit au moins un commutateur externe (58).

3. Système (50) selon la revendication 1 ou 2, dans lequel :
ladite logique de commande (64) est utilisable en outre pour entrer dans un état désactivé du mode de commande (106) et pour maintenir le au moins un stabilisateur automatique (16) de barre inférieure en mode rigide malgré le fait que l'attelage trois points (12) est abaissé jusqu'à une position (110) correspondant à une valeur de seuil de transition en mode de flottement (104) lorsque l'attelage trois points (12) est abaissé en réaction à au moins un commutateur extérieur (58).

4. Système (50) selon la revendication 3, dans lequel :
ladite logique de commande (64) est utilisable en outre pour reprendre la transition par le au moins un stabilisateur automatique (16) de barre inférieure du mode rigide au mode de flottement dès que l'attelage trois points (12) atteint ladite position (110) correspondant à ladite valeur de seuil de transition en mode de flottement (104) lorsque l'attelage trois points (12) est abaissé en réaction à une entrée autre que ledit au moins un commutateur extérieur (58).

5. Système (50) selon la revendication 3, dans lequel :
ladite logique de commande (64) est utilisable en outre pour la reprise du passage du au moins un stabilisateur automatique (16) de barre inférieure du mode rigide au mode de flottement dès que l'attelage trois points (12) atteint ladite position (110) correspondant à ladite valeur de seuil de transition en mode de flottement (104) uniquement après qu'un conducteur ait placé ladite logique de commande (64) dans un état activé (100) de mode de commande.

6. Système (50) selon l'une des revendications 3 à 5, comprenant en outre :
un dispositif (52) connecté au dispositif de commande (54) et conçu pour permettre à un conducteur de saisir ladite valeur de seuil de transition en mode rigide (102) et/ou ladite valeur de seuil de transition en mode de flottement (104).

7. Système (50) selon la revendication 6, dans lequel :
ledit dispositif (52) est capable de recevoir des informations et/ou des sélections saisies, et est capable en outre d'afficher des informations d'état.

8. Système (50) selon l'une quelconque des revendications précédentes, dans lequel :
ledit au moins un stabilisateur automatique (16) de barre inférieure est conçu pour déplacer ledit attelage trois points (12) jusqu'à une position centrée latéralement lorsqu'il est positionné en mode rigide.

9. Système (50) selon l'une quelconque des revendications précédentes, dans lequel :
ladite logique de commande (64) est utilisable en outre pour être mise dans un état désactivé du mode de commande (106) en réaction à une sélection du conducteur, dans lequel ledit au moins un stabilisateur automatique (16) de barre inférieure demeure dans le mode rigide tout au long de la plage de déplacement de l'attelage trois points (12).

10. Système (50) selon l'une quelconque des revendications précédentes, dans lequel :
ledit au moins un stabilisateur automatique (16) de barre inférieure est l'un parmi les suivants : hydraulique, pneumatique, électrique, magnétique ou mécanique.

11. Système (50) selon l'une quelconque des revendications précédentes, dans lequel :
ledit système (50) comprend en outre au moins un capteur de pression (62) fournissant une information en retour (82) à ladite logique de commande (64) indiquant l'état du mode rigide ou de flottement du dit au moins un stabilisateur automatique (16) de barre inférieure.

12. Procédé de commande d'un attelage trois points (12) d'un tracteur agricole (10), le procédé comprenant les étapes consistant à :
fournir au moins un stabilisateur automatique (16) de barre inférieure relié à la au moins une barre inférieure (14) de l'attelage trois points (12) ;
stabiliser sélectivement l'attelage trois points (12) contre un déplacement latéral au moyen du au moins un stabilisateur automatique (16) de barre inférieure lorsqu'il est en mode rigide ;
permettre sélectivement un déplacement latéral de l'attelage trois points (12) au moyen du au moins un stabilisateur automatique (16) de barre inférieure lorsqu'il est en mode de flottement :
fournir un dispositif de commande (54) doté d'une logique de commande (64) connecté à au moins un stabilisateur automatique (16) de barre inférieure ;
utiliser ladite logique de commande (64) pour commander la sélection du mode rigide ou du mode de flottement du au moins un stabilisateur automatique (16) de barre inférieure ; et
fournir au moins un commutateur extérieur (58) connecté au dispositif de commande (54) à utiliser par le conducteur pour soulever ou abaisser l'attelage trois points (12) à un emplacement adjacent au tracteur agricole (10) ;
réception par la logique de commande (64) d'une entrée (76) à partir du dit au moins un commutateur externe (58) ;
**caractérisé en ce que** le procédé comprend en outre les étapes de : ladite logique de commande (64) interrompt le soulèvement de l'attelage trois points (12) et met le au moins un stabilisateur automatique (16) de barre inférieure en mode rigide lorsque :
ledit attelage trois points (12) est en train d'être soulevé en réaction au dit au moins un commutateur extérieur (58),
ledit attelage trois points (12) est soulevé jusqu'à une position (108) correspondant à une valeur de seuil de transition en mode rigide (102), et
le au moins un stabilisateur automatique (16) de barre inférieure est en mode de flottement ; et
ladite logique de commande (64) permet la reprise du soulèvement de l'attelage trois points (12) au-delà de la position (108) correspondant à la valeur de seuil de transition en mode rigide (102) uniquement après un déclenchement du au moins un commutateur extérieur (58) et une remise en route du déplacement vers le haut de l'attelage trois points (12) par le conducteur au moyen du au moins un commutateur extérieur (58).

13. Procédé selon la revendication 12, comprenant en outre les étapes de :
entrée de la logique de commande (64) dans un état désactivé de mode de commande (106) et maintien du au moins un stabilisateur automatique (16) de barre inférieure en mode rigide malgré le fait que l'attelage trois points (12) est abaissé jusqu'à une position (110) correspondant à une valeur de seuil de transition en mode de flottement (104) lorsque l'attelage trois points (12) est abaissé en réaction au dit au moins un commutateur extérieur (58).

14. Procédé selon la revendication 13, dans lequel :
ladite logique de commande (64) permet la reprise de la transition par le au moins un stabilisateur automatique (16) de barre inférieure du mode rigide au mode de flottement dès que l'attelage trois points (12) atteint ladite position (110) correspondant à ladite valeur de seuil de transition en mode de flottement (104), lorsque l'attelage trois points (12) est abaissé en réaction à une entrée autre que ledit au moins un commutateur extérieur (58).

15. Procédé selon la revendication 13, dans lequel :
ladite logique de commande (64) permet la reprise par le au moins un stabilisateur automatique (16) de barre inférieure de la transition du mode rigide au mode de flottement lorsque l'attelage trois points (12) atteint ladite position (110) correspondant à ladite valeur de seuil de transition en mode de flottement (104) uniquement après qu'un conducteur ait mis la logique de commande (64) dans un état désactivé de mode de commande (100).
